# EUROPÄISCHE PATENTSCHRIFT

(11) **EP 0 636 049 B1**
(45) Veröffentlichungstag und Bekanntmachung des Hinweises auf die Patenterteilung: **20.03.1996**
(21) Anmeldenummer: 93908940.5
(22) Anmeldetag: 14.04.1993
(51) Int. Cl.: B01D 46/24, B01D 46/42

(54) **VORRICHTUNG ZUR GLEICHMÄSSIGEN VERTEILUNG EINER ZWEIPHASENSTRÖMUNG**
DEVICE FOR THE UNIFORM DISTRIBUTION OF A TWO-PHASE STREAM
DISPOSITIF DE REPARTITION REGULIERE D'UN ECOULEMENT A DEUX PHASES

(30) Priorität: 16.04.1992 DE 4212769
(43) Veröffentlichungstag der Anmeldung: 01.02.1995
(73) Patentinhaber: Schumacher Umwelt- und Trenntechnik GmbH, D-74564 Crailsheim (DE)
(72) Erfinder: DURST, Michael, D-7189 Frankenhardt-Honhardt (DE); MÜLLER, Max, D-7181 Kressberg-Haselhof (DE); SCHNELL, Manfred, D-7180 Crailsheim (DE); SCHULZE-DIECKHOFF, Rudolf, D-8150 Fürth (DE); MINZENBACH, Gerd, D-6836 Oftersheim (DE)
(74) Vertreter: Hoeger, Stellrecht & Partner
(86) Internationale Anmeldenummer: EP9300901
(87) Internationale Veröffentlichungsnummer: WO9320924

(56) Entgegenhaltungen:
- EP-A- 0 314 253
- DE-A- 3 803 561
- FR-A- 2 244 559

## Beschreibung

Die Erfindung betrifft einen Filterbehälter zum Trennen eines aus gasförmigen und festen Bestandteilen bestehenden Zweiphasengemisches, der durch eine starre, mit Durchbrechungen versehene Platte in einen unten liegenden Rohgasraum und in einen oben über dem Rohgasraum liegenden Reingasraum unterteilt ist, wobei in den Durchbrechungen der starren Platte nach unten in den Rohgasraum herabführende Filterelemente befestigt sind, in den Rohgasraum eine Zweiphasenströmung einführbar ist, der Reingasraum einen über den Filterelementen gelegenen Auslaß für die durch die Filterelemente von den festen Bestandteilen befreiten gasförmigen Bestandteile der Strömung aufweist, und den Filterelementen Reinigungsvorrichtungen zum Rückspülen der Filterelemente zugeordnet sind.

In Filterbehältern der angegebenen Art (DE-A1-40 29 395; FR-A1-22 44 559) ist es wichtig, daß die Zweiphasenströmung die einzelnen Filterelemente gleichmäßig erreicht, daß Verwirbelungen der Strömung auf ein Mindestmaß reduziert sind und die Strömungsgeschwindigkeit überall im Filtergehäuse möglichst annähernd gleiche Werte besitzt.

Dies ist insbesondere wichtig bei der Reinigung der Filterelemente mittels eines entgegen der Zweiphasenströmung gerichteten Gas-Druck-Impulses. Eine solche Reinigung erfolgt gewöhnlich während des Betriebes des Filterbehälters, wobei der Gas-Druck-Impuls lediglich auf einen Teil der Filterelemente aufgebracht wird, während die übrigen Filterelemente ungestört ihre Filterfunktion weiter ausüben. Wenn die dabei von den Filterelementen abgelösten und herunterfallenden Festkörper (Staub) durch die im Behälter nach wie vor herrschende, im wesentlichen nach oben gerichtete Zweiphasenströmung erfaßt werden, werden sie verwirbelt, und es kann leicht zu einer unerwünschten Rückverschmutzung der Filterelemente kommen.

Man hat daher schon durch Verwendung von Prallplatten, schräge Einführung der Zweiphasenströmung in den Filterbehälter, Strömungsverteiler und dergleichen versucht, die in den Rohgasraum eintretende Zweiphasenströmung so zu führen, daß sie möglichst mit dem herabfallenden Staub gleichgerichtet ist und diesen daran hindert, die Filterelemente rückzuverschmutzen. Eine solche "Gleichstromführung" von Rohgas und herabfallendem Staub ist bei kleinen Filterbehältern mit wenigen Filterelementen relativ unkompliziert einzustellen. Bei großen Filterbehältern mit zahlreichen Filterelementen, hohen Volumendurchsätzen und/oder hohen Druckverlusten und Staubbeladungen ist bisher das Problem der Rückverschmutzung noch nicht befriedigend gelöst.

Es ist Aufgabe der Erfindung, eine gattungsgemäße Vorrichtung so auszubilden, daß die in den Rohgasraum des Filterbehälters eintretende Zweiphasenströmung im wesentlichen nach unten gerichtet ist und von den Filterelementen herabfallenden Staub zum Boden des Filterbehälters hin lenkt.

Die Aufgabe wird bei einem gattungsgemäßen Filterbehälter erfindungsgemäß dadurch gelöst, daß zur Aufnahme der Zweiphasenströmung ein wenigstens teilweise im Inneren des Rohgasraumes verlaufendes, sich zwischen die Filterelemente verzweigendes Leitungssystem vorgesehen ist, das die Zweiphasenströmung in mindestens zwei Teilströme aufteilt und diese Teilströme an den Filterelementen vorbei nach oben bis in die Nähe der starren Platte führt, wo die Teilströme durch Öffnungen aus dem Leitungssystem in den Rohgasraum austreten, und daß in der Nähe der Austrittsstelle der Teilströme aus dem Leitungssystem im Rohgasraum Umlenkeinrichtungen angeordnet sind, welche die Teilströme im Rohgasraum frei nach unten umlenken.

Die nachstehende Beschreibung einer bevorzugten Ausführungsform der Erfindung dient im Zusammenhang mit beiliegender Zeichnung der weiteren Erläuterung. Es zeigen:
- Figur 1: schematisch einen Filterbehälter mit einem der Einführung einer Zweiphasenströmung dienenden Leitungssystem;
- Figur 2: schematisch eine Draufsicht eines modifizierten Leitungssystemes und
- Figur 3: schematisch eine starre, mit Durchbrechungen versehene Platte zur Abstützung von Filterelementen, wobei die Filterelemente gruppenweise zu Segmenten zusammengefaßt sind.

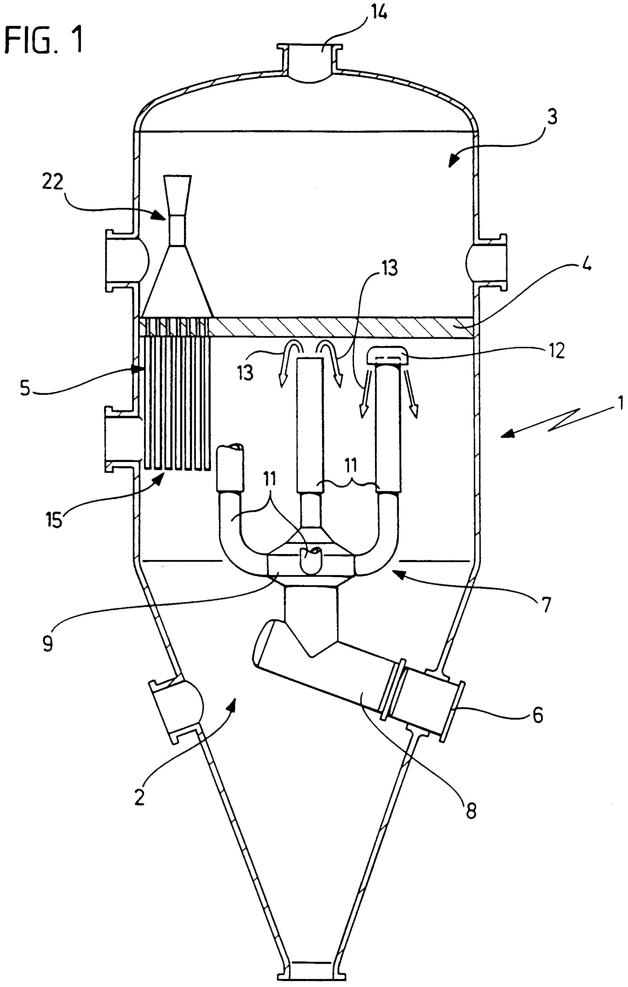

Der in Figur 1 schematisch dargestellte Filterbehälter 1 herkömmlicher Bauart umfaßt einen unten liegenden, der Staubabscheidung dienenden, trichterförmigen Rohgasraum 2 und einen darüber liegenden Reingasraum 3, die durch eine starre Platte 4 voneinander getrennt sind. Die Platte 4 dient der Abstützung von Filterelementen 5, die im dargestellten Falle als nach unten hängende Filterkerzen aus keramischem Material ausgebildet sind. Die Filterelemente 5 sind in Durchbrechungen der starren Platte 4 angeordnet, so daß ein Gas aus dem Rohgasraum 2 durch die Filterelemente 5 hindurch in den Reingasraum 3 strömen kann.

Der Rohgasraum 2 weist in herkömmlicher Weise einen unterhalb der Filterelemente 5 gelegenen Einlaß 6 für eine aus gasförmigen und festen Bestandteilen bestehende Zweiphasenströmung, beispielsweise ein mit Staub- und Rußteilchen oder dergleichen gemischtes Heißgas auf. Mit dem Einlaß 6 ist, wie dargestellt, ein im Inneren des Rohgasraumes 2 gelegenes Leitungssystem 7 verbunden, das ein Zentralrohr 8, einen damit verbundenen Verteiler 9 und von diesem nach oben abgehende Einzelrohre 11 umfaßt. Bei der dargestellten Ausführungsform gehen vom Verteiler 9 symmetrisch insgesamt fünf nach oben gerichtete Einzelrohre 11 ab, von denen in Figur 1 lediglich vier angedeutet sind. Das fünfte Einzelrohr liegt hinter dem zentralen Einzelrohr 11. Die Einzelrohre 11 sind an ihren oben in der Nähe der Unterseite der starren Platte 4 gelegenen Enden offen. Die durch den Einlaß 6 eintretende Zweiphasenströmung verzweigt sich über das Zentralrohr 8 und den Verteiler 9 in die Einzelrohre 11 durchfließende Teilströme. Diese Teilströme werden von den Einzelrohren 11 an den Filterelementen 5 vorbei nach oben bis in die Nähe der Platte 4 geführt, wo sie aus den offenen Enden der Rohre 11 in den Rohgasraum 2 austreten. Dabei werden die Teilströme, wie an dem zentralen Einzelrohr 11 in Figur 1 dargestellt, von der als Prallfläche wirkenden Unterseite der Platte 4 nach unten umgelenkt, so daß die Strömungsrichtung des Rohgases nunmehr parallel zu den Filterelementen 5 nach unten zum Boden des Rohgasraumes 2 gekehrt ist.

Anstatt die aus den Einzelrohren 11 austretenden Teilströme direkt durch die Platte 4 umzulenken, können als Umlenkeinrichtungen auch die offenen Enden der Einzelrohre 11 überfangende Kappen 12 verwendet werden, die als Prallplatten wirken. In jedem Falle ergibt sich eine - in Figur 1 durch die Pfeile 13 angedeutete - Rohgasströmung, die an den langgestreckten, kerzen- oder schlauchartigen Filterelementen 5 entlang ausschließlich nach unten gerichtet ist.

Durch die im Inneren des Rohgasraumes 2 zunächst ausschließlich nach unten gerichteten Rohgas-Teilströme wird erreicht, daß von den Filterelementen 5 abfallender Staub von diesen Teilströmen nach unten mitgenommen wird, wo er sich am Boden des Rohgasraumes 2 ansammelt. Es kann also nicht zu einer "Rückverschmutzung" der Filterelemente 5 kommen, wie sie gewöhnlich dann eintritt, wenn das Rohgas vom Einlaß 6 her direkt nach oben gerichtet zur Platte 4 und zu den Filterelementen 5 hin strömt.

Das zunächst mit relativ hoher Geschwindigkeit aus den Einzelrohren 11 austretende und nach unten strömende Rohgas verringert allmählich seine Geschwindigkeit, kehrt seine Richtung um und strömt über die Filterelemente 5 und die diesen zugeordneten Durchbrechungen in der Platte 4 nach oben in den Reingasraum 3, wobei feste Bestandteile des Rohgases von den Filterelementen 5 zurückgehalten werden. Das gereinigte Gas strömt schließlich aus dem Reingasraum 3 durch einen oberhalb der Filterelemente 5 angeordneten Auslaß 14 ab.

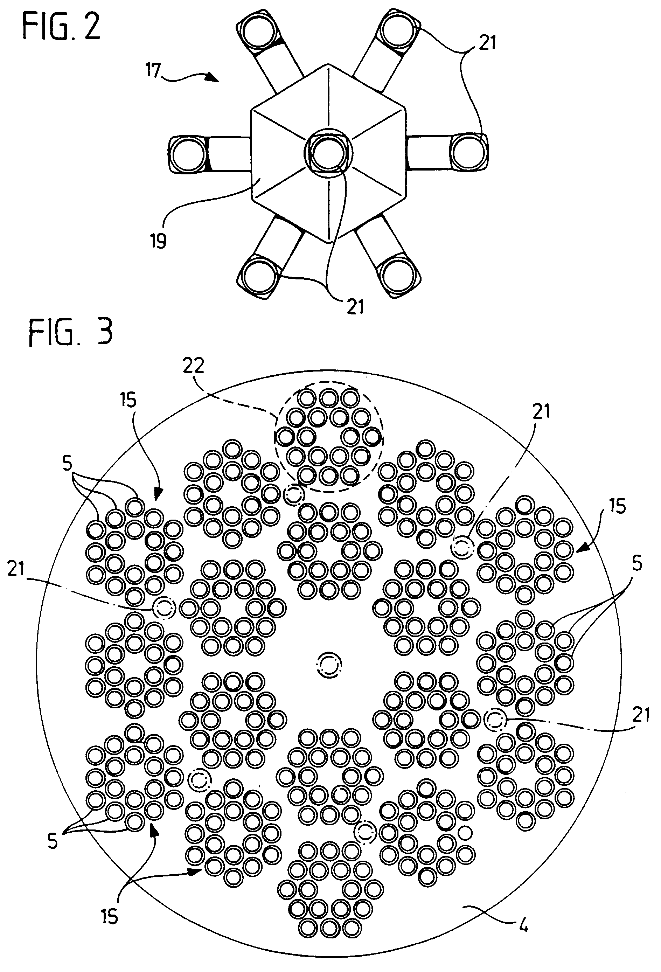

Die Figur 3 zeigt schematisch eine Untenansicht der Platte 4. Die einzelnen, langgestreckten Filterelemente 5 sind jeweils gruppenweise zu Bündeln oder Segmenten 15 zusammengefaßt, die ihrerseits unter Freilassung von "Gassen" oder Zwischenräumen über die Fläche der Platte 4 verteilt sind. In diesen Zwischenräumen sind die vertikal nach oben gerichteten Einzelrohre 11 des Leitungssystems 7 angeordnet. Auf diese Weise kann das eintretende Rohgas gleichmäßig auf die einzelnen Filterelemente 5 verteilt werden, so daß diese ihre Filterfunktion gleichmäßig ausüben können. (In Figur 1 ist der besseren Übersichtlichkeit halber nur ein einziges Segment 15 aus Filterelementen 5 dargestellt.)

Die Figur 2 zeigt ein gegenüber Figur 1 abgewandeltes Leitungssystem 17, bei dem von einem gemeinsamen zentralen Verteiler 19 außer einem vorzugsweise vorgesehenen zentralen Einzelrohr 21 weitere sechs Einzelrohre 21 symmetrisch abgehen. Diese vertikal nach oben parallel zu den langgestreckten Filterelementen 5 gerichteten Einzelrohre 21 sind auch in Figur 3 zwischen jeweils drei Segmenten 15 von Filterelementen 5 dargestellt.

Wie weiterhin in Figur 1 schematisch angedeutet, ist jeweils einem Bündel oder Segment 15 von Filterelementen 5 auf der dem Reingasraum zugewandten Fläche der starren Platte 4 eine Reinigungsvorrichtung 22 zugeordnet, mit der die betreffenden Filterelemente 5 dieses Segments bei Bedarf gereinigt werden können. Die Reinigungsvorrichtung 22 ist vorteilhafterweise als Gegenstrom-Ejektor ausgebildet, der es gestattet, die Filterelemente 5 in an sich bekannter Weise mit in den Rohgasraum 3 gerichteten Gas-Druck-Impulsen zu beaufschlagen, wodurch Feststoffpartikel, die sich am Filterelement 5 angesammelt haben, abgelöst werden, so daß sie nach unten fallen. Diese nach unten fallenden Feststoffpartikel werden auf ihrem Wege zum Boden des Rohgasraumes durch das einströmende Rohgas nicht gestört, da diese ebenfalls in der beschriebenen Weise im Bereich der Filterelemente 5 eine starke, nach unten gerichtete Strömungskomponente hat. Man kann auf diese Weise jeweils einen Teil der Segmente 15 durch die Reinigungsvorrichtungen 22 im Gegenstrom reinigen, während der Rest der Segmente seine Filterfunktion weiterhin ausübt. Es wurde gefunden, daß gerade bei diesem Reinigungsvorgang die in den Rohgasraum 2 aus den Einzelrohren 11 eintretenden, nach unten gerichteten Teilströme die Ablagerung des Staubes begünstigen.

Bei den in Figur 1 und 2 dargestellten Ausführungsformen der Erfindung ist der Verteiler 9 bzw. 21 als eine zentral im Rohgasraum angeordnete Verteilerkammer ausgebildet. Bei abgewandelten Ausführungsformen könnte statt einer solchen zentralen Verteilerkammer auch eine peripher im Rohgasraum 2 oder außerhalb desselben angeordnete Ringleitung vorgesehen werden, von der die Einzelrohre 11 im wesentlichen zunächst horizontal und dann vertikal nach oben zur Platte 4 hin abgehen. Bei einer außerhalb des Filterbehälters 1 angeordneten Ringleitung gehen von dieser Leitung Stichleitungen radial und im wesentlichen waagerecht durch entsprechende Öffnungen des Behälters 1 in dessen Inneres hinein.

Der beschriebene Filterbehälter 1 mit dem der gleichmäßigen Verteilung der Zweiphasenströmung dienenden Leitungssystem 7 eignet sich für die Reinigung beliebiger Gas-Feststoff-Mischungen. Insbesondere eignet er sich auch für die Reinigung von heißen Abgasen, die Temperaturen zwischen 100 und 1000°, vorzugsweise zwischen 200 und 800°C haben können. Die Systemdrücke im Filterbehälter 1 liegen vorzugsweise zwischen 0,75 und 50, insbesondere 10 und 35 bar.

## Patentansprüche

1. Filterbehälter (1) zum Trennen eines aus gasförmigen und festen Bestandteilen bestehenden Zweiphasengemisches, der durch eine starre, mit Durchbrechungen versehene Platte (4) in einen unten liegenden Rohgasraum (2) und in einen oben über dem Rohgasraum liegenden Reingasraum (3) unterteilt ist, wobei in den Durchbrechungen der starren Platte nach unten in den Rohgasraum herabführende Filterelemente (5) befestigt sind, in den Rohgasraum eine Zweiphasenströmung einführbar ist, der Reingasraum einen über den Filterelementen gelegenen Auslaß (14) für die durch die Filterelemente von den festen Bestandteilen befreiten gasförmigen Bestandteile der Strömung aufweist und den Filterelementen (5) Reinigungsvorrichtungen (22) zum Rückspülen der Filterelemente zugeordnet sind,
**dadurch gekennzeichnet, daß**
zur Aufnahme der Zweiphasenströmung ein wenigstens teilweise im Inneren des Rohgasraumes (2) verlaufendes, sich zwischen die Filterelemente (5) verzweigendes Leitungssystem (7) vorgesehen ist, das die Zweiphasenströmung in mindestens zwei Teilströme aufteilt und diese Teilströme an den Filterelementen (5) vorbei nach oben bis in die Nähe der starren Platte (4) fuhrt, wo die Teilströme durch Öffnungen aus dem Leitungssystem (7) in den Rohgasraum (2) austreten, und daß in der Nähe der Austrittsstelle der Teilströme aus dem Leitungssystem (7) im Rohgasraum Umlenkeinrichtungen (4, 12) angeordnet sind, welche die Teilströme im Rohgasraum (2) frei nach unten umlenken.

2. Vorrichtung nach Anspruch 1, dadurch gekennzeichnet, daß das Leitungssystem (7) einen Verteiler (9) umfaßt, von dem aus an ihren Enden offene Einzelrohre (11, 21) im wesentlichen vertikal nach oben zur starren Platte (4) hin abgehen.

3. Vorrichtung nach Anspruch 2, dadurch gekennzeichnet, daß der Verteiler (9) als eine zentral im Rohgasraum (2) angeordnete Verteilerkammer ausgebildet ist.

4. Vorrichtung nach Anspruch 2, dadurch gekennzeichnet, daß der Verteiler (9) als eine peripher im oder außerhalb des Filterbehälters (1) angeordnete Ringleitung ausgebildet ist.

5. Vorrichtung nach Anspruch 1, dadurch gekennzeichnet, daß als Umlenkeinrichtungen die den Austrittsstellen der Teilströme gegenüberliegenden Bereiche der starren Platte (4) dienen.

6. Vorrichtung nach Anspruch 1, dadurch gekennzeichnet, daß als Umlenkeinrichtungen Kappen (12) dienen, welche die Austrittsstellen der Teilströme als Prallplatten frei überragen.

7. Vorrichtung nach Anspruch 2, dadurch gekennzeichnet, daß in Segmenten der starren Platte (4) jeweils mehrere Filterelemente (5) zu Gruppen (15) zusammengefaßt sind und die Einzelrohre (11, 21) in Freiräumen zwischen diesen Gruppen (15) verlaufen.

8. Vorrichtung nach Anspruch 7, dadurch gekennzeichnet, daß jeder Gruppe (15) von Filterelementen (5) eine Reinigungsvorrichtung (22) zugeordnet ist.

9. Vorrichtung nach Anspruch 8, dadurch gekennzeichnet, daß die Reinigungsvorrichtungen (22) als Gegenstromejektoren ausgebildet sind.

10. Vorrichtung nach Anspruch 1, dadurch gekennzeichnet, daß die Filterelemente (5) als von der starren Platte (4) nach unten herabführende Filterkerzen oder Filterschläuche ausgebildet sind.

11. Vorrichtung nach Anspruch 1, dadurch gekennzeichnet, daß die Filterelemente (5) aus keramischem Material bestehen.

12. Verwendung eines Filterbehälters (1) nach Anspruch 1 zum Trennen einer Zweiphasenströmung mit einer Temperatur zwischen etwa 200 und 800°C bei Drücken im Filterbehälter (1) zwischen etwa 0,75 und 50 bar.

## Claims

1. A filter housing (1) for separating a two-phase mixture consisting of gaseous and solid constituents, which is divided by a rigid plate (4) provided with openings into a crude gas chamber (2) positioned at the bottom and a pure gas chamber (3) positioned at the top above the crude gas chamber, wherein filter elements (5) leading downwardly into the crude gas chamber are attached in the openings of the rigid plate, a two-phase flow can be introduced into the crude gas chamber, the pure gas chamber has an outlet (14), positioned above the filter elements, for the gaseous constituents of the flow freed from the solid constituents by the filter elements, and cleaning devices (22) for backwashing the filter elements are associated with the filter elements (5),
**characterised in that** to contain the two-phase flow a pipe system (7) running at least partially in the interior of the crude gas chamber (2) and branching between the filter elements (5) is provided, which divides the two-phase flow into at least two partial streams and conveys these partial streams upwards past the filter elements (5) into the vicinity of the rigid plate (4) where the partial streams emerge though apertures from the pipe system (7) into the crude gas chamber (2),
**and in that,** in the vicinity of the outlet point of the partial streams from the pipe system (7), deflecting devices (4, 12), which deflect the partial streams in the crude gas chamber freely downwards, are disposed in the crude gas chamber.

2. A device according to Claim 1,
**characterised in that** the pipe system (7) includes a distributor (9), from which individual pipes (11, 21) open at their ends lead substantially vertically upwards to the rigid plate (4).

3. A device according to Claim 2,
**characterised in that** the distributor (9) is constructed as a distribution chamber disposed centrally in the crude gas chamber (2).

4. A device according to Claim 2,
**characterised in that** the distributor (9) is constructed as a closed circular pipeline disposed peripherally in or outside the filter housing (1).

5. A device according to Claim 1,
**characterised in that** the regions of the rigid plate (4) lying opposite the outlet points of the partial streams serve as deflecting devices.

6. A device according to Claim 1,
**characterised in that** caps (12), which freely protrude as baffle plates over the outlet points of the partial streams, are used as deflecting devices.

7. A device according to Claim 2,
**characterised in that** in segments of the rigid plate (4) in each case several filter elements (5) are combined to form groups (15) and the individual pipes (11, 21) are run (11, 21) in spaces between these groups (15).

8. A device according to Claim 7,
**characterised in that** a cleaning device (22) is associated with each group (15) of filter elements (5).

9. A device according to Claim 8,
**characterised in that** the cleaning devices (22) are constructed as counter-flow ejectors (22).

10. A device according to Claim 1,
**characterised in that** the filter elements (5) are constructed as filter cartridges or filtering bags leading downwardly from the rigid plate (4).

11. A device according to Claim 1,
**characterised in that** the filter elements (5) are made of ceramic material.

12. Use of a filter housing (1) in accordance with Claim 1 for separating a two-phase flow having a temperature of between approximately 200 and 800°C at pressures in the filter housing (1) of between approximately 0.75 and 50 bar.

## Revendications

1. Récipient de filtration (1) pour séparer un mélange à deux phases constitué de composants gazeux et solides, récipient qui est divisé, par une plaque rigide (4) pourvue de percements, en une chambre de gaz impur (2) située en bas et une chambre de gaz purifié (3) située en haut, au-dessus de la chambre de gaz impur, des éléments filtrants (5) s'étendant vers le bas dans la chambre de gaz impur étant fixés dans les percements de la plaque rigide, un flux à deux phases pouvant être introduit dans la chambre de gaz impur, la chambre de gaz purifié présentant une évacuation (14), située au-dessus des éléments filtrants, pour les composants gazeux du flux libérés des composants solides par les éléments filtrants, et des dispositifs de nettoyage (22) étant associés aux éléments filtrants (5) pour laver ces derniers à contre-courant,
caractérisé en ce qu'afin de recevoir le flux à deux phases, un système de conduites (7) se ramifiant entre les éléments filtrants (5) est prévu au moins en partie à l'intérieur de la chambre de gaz impur (2), lequel système divise le flux à deux phases en au moins deux flux partiels et dirige ces flux partiels, le long des éléments filtrants (5), vers le haut jusqu'au voisinage de la plaque rigide (4), où ces flux partiels sortent par des ouvertures du système de conduites (7) dans la chambre de gaz impur (2), et en ce que des dispositifs déflecteurs (4, 12) sont disposés dans la chambre de gaz impur au voisinage du point de sortie des flux partiels du système de conduites (7), lesquels dispositifs renvoient les flux partiels librement vers le bas dans la chambre de gaz impur (2).

2. Dispositif selon la revendication 1, caractérisé en ce que le système de conduites (7) comprend un distributeur (9) à partir duquel des tubulures individuelles (11, 21), ouvertes à leur extrémité, s'étendent sensiblement verticalement vers le haut en direction de la plaque rigide (4).

3. Dispositif selon la revendication 2, caractérisé en ce que le distributeur (9) est réalisé sous la forme d'une chambre de distribution disposée centralement dans la chambre de gaz impur (2).

4. Dispositif selon la revendication 2, caractérisé en ce que le distributeur (9) est réalisé sous la forme d'une conduite annulaire disposée périphériquement dans le récipient de filtration (1) ou à l'extérieur de ce dernier.

5. Dispositif selon la revendication 1, caractérisé en ce que les zones de la plaque rigide (4), qui font face aux points de sortie des flux partiels, servent de dispositifs déflecteurs.

6. Dispositif selon la revendication 1, caractérisé en ce que des calottes (12), qui dépassent librement des points de sortie des flux partiels en tant que plaques de chicane, servent de dispositifs déflecteurs.

7. Dispositif selon la revendication 2, caractérisé en ce que plusieurs éléments filtrants (5) sont réunis en groupes respectifs (15) dans des segments de la plaque rigide (4), et les tubulures individuelles (11, 21) s'étendent dans des espaces libres entre ces groupes (15).

8. Dispositif selon la revendication 7, caractérisé en ce qu'un dispositif de nettoyage (22) est associé à chaque groupe (15) d'éléments filtrants (5).

9. Dispositif selon la revendication 8, caractérisé en ce que les dispositifs de nettoyage (22) sont réalisés sous la forme d'éjecteurs à contre-courant.

10. Dispositif selon la revendication 1, caractérisé en ce que les éléments filtrants (5) sont réalisés sous la forme de bougies filtrantes ou de sacs filtrants s'étendant vers le bas à partir de la plaque rigide (4).

11. Dispositif selon la revendication 1, caractérisé en ce que les éléments filtrants (5) sont réalisés en matériau céramique.

12. Utilisation d'un récipient de filtration (1) selon la revendication 1, pour la séparation d'un flux à deux phases à une température comprise entre environ 200 et 800°C, à des pressions dans le récipient de filtration (1) comprises entre environ 0,75 et 50 bars.
